# EUROPÄISCHE PATENTSCHRIFT

(11) **EP 0 937 213 B1**
(45) Veröffentlichungstag und Bekanntmachung des Hinweises auf die Patenterteilung: **09.04.2003**
(21) Anmeldenummer: 97945826.2
(22) Anmeldetag: 14.10.1997
(51) Int. Cl.: F16G 13/16

(54) **KETTENGLIED AUS VERSCHIEDENEN WERKSTOFFEN UND VERFAHREN ZU DESSEN HERSTELLUNG**
CHAIN LINK OF DIFFERENT MATERIALS AND METHOD FOR ITS PRODUCTION
ELEMENT DE CHAINE EN DIFFERENTS MATERIAUX ET SON PROCEDE DE FABRICATION

(30) Priorität: 15.11.1996 DE 19647322
(43) Veröffentlichungstag der Anmeldung: 25.08.1999
(73) Patentinhaber: Kabelschlepp Gesellschaft mit beschränkter Haftung, 57074 Siegen (DE)
(72) Erfinder: WEBER, Willibald, D-57250 Netphen (DE)
(74) Vertreter: Kahlhöfer, Hermann, Dipl.-Phys.
(86) Internationale Anmeldenummer: EP9705641
(87) Internationale Veröffentlichungsnummer: WO98022728

(56) Entgegenhaltungen:
- EP-A- 0 154 882
- EP-A- 0 415 029
- EP-A- 0 456 537
- DE-A- 1 932 428
- DE-A- 19 512 088
- DE-A- 19 544 931

## Beschreibung

Die Erfindung betrifft ein Kettenglied sowie ein Verfahren zur Herstellung eines Kettengliedes.

Bewegliche Apparate und Maschinen werden mit Verbrauchsmitteln aller Art über Leitungen versorgt, die in einer Energieführungskette gerührt werden. Eine Energieführungskette umfaßt eine Vielzahl von gelenkig miteinander verbundenen Kettengliedern. Es ist bekannt, daß Kettenglieder einer Energieführungskette aus einem Kunststoff bestehen. Ein Kettenglied weist zwei Kettenlaschen auf, die durch wenigstens eine Traverse miteinander verbunden sind. Die Traverse kann mit den Kettenlaschen einstückig ausgebildet sein. Zur Ausbildung einer gelenkigen Verbindung zwischen benachbarten Kettengliedern weist jede Kettenlasche einen Bolzen auf, der in eine korrespondierende Bolzenaufnahme einer Kettenlasche eines benachbarten Kettengliedes eingreift. Zur Begrenzung des Verschwenkwinkels zwischen benachbarten Kettengliedern weist wenigstens eine Kettenlasche wenigstens einen Anschlag auf.

Während des Betriebes einer Energieführungskette unterliegen die relativ zueinander beweglichen Teile der benachbarten Kettenglieder einen Verschleiß. Durch Verschleiß des Bolzens und der Bolzenaufnahme, in der der Bolzen angeordnet ist, kann es zu Funktionsbeeinträchtigungen der Energieführungskette kommen.

Durch die EP 0 154 882 B1 ist ein Vorschlag für die Ausgestaltung einer Energieführungskette bekannt, bei der zusätzlich zu den einander anliegenden Flächen zwischen Bolzen und Bolzenaufnahme auch noch eine Abstützung zwischen den verhältnismäßig großen Flächen am Außenrand eines Kettengliedes und im Innenrand eines benachbarten Kettengliedes, so daß die spezifischen Flächenpressungen verringert werden. Dies trägt zu einer Verringerung des Verschleißes zwischen dem Bolzen und der Bolzenaufnahme bei.

Die einzelnen Kettenglieder einer Energieführungskette gleiten während des Betriebes auf einer Unterlage. Es ist auch möglich, daß ein Obertrum auf dem Untertrum einer Energieführungskette gleitet. Dabei kann es zu erheblichen Verschleißerscheinungen und auch einer unangenehmen Geräuschentwicklung kommen. Durch die EP 0 415 029, die den Oberbegriff des Anspruchs 1 zeigt, ist eine Energieführungskette bekannt, durch die vorgeschlagen wird, daß an den Schmalseiten der Kettenlaschen lösbar befestigte Gleitkufen aus einem gleitfähigen und verschleißarmen Kunststoff mit guten Dämpfungseigenschaften angeordnet werden. Der Vorteil dieser Ausgestaltung einer Energieführungskette besteht darin, daß die Kettenglieder wahlweise mit oder ohne Gleitkufen betrieben werden können, je nach dem für welchen Anwendungsfall die Energieführungskette bestimmt ist.

Hiervon ausgehend liegt der vorliegenden Erfindung die Aufgabe zugrunde das Kettenglied so weiterzubilden, daß dieses funktional angepaßte Bereiche aufweist. Ein weiteres Ziel der Erfindung ist es ein Verfahren zur Herstellung eines Kettengliedes anzugeben, welches einfach durchfuhrbar ist.

Zur Lösung dieser Aufgabe werden ein Kettenglied mit den Merkmalen des Anspruchs 1 sowie ein Verfahren mit den Merkmalen des Anspruchs 11 vorgeschlagen. Vorteilhafte Weiterbildungen sind Gegenstand der Unteransprüche.

Das erfindungsgemäße Kettenglied aus einem ersten Kunststoff für eine Energieführungskette weist zwei Kettenlaschen, die durch wenigstens eine Traverse miteinander verbunden sind, auf. Jede Kettenlasche hat einen Bolzen und eine Bolzenaufnahme sowie wenigstens einen Anschlag. Das Kettenglied zeichnet sich durch wenigstens einen Bereich mit einer Einlage aus, die wenigstens einen Teil einer Oberfläche des Kettengliedes bildet. Die Einlage besteht aus wenigstens einem zweiten Kunststoff, der verschieden vom ersten Kunststoff ist. Die Einlage ist über wenigstens ein Verknüpfungselement mit dem Kettenglied nach dem Mehr-Komponenten-Spritzverfahren verbunden. Das erfindungsgemäße Kettenglied weist funktionale Bereiche auf, die durch die Einlage gebildet sind. Entsprechend den Anforderungen an den funktionalen Bereich kann eine geeignete Auswahl eines Kunststoff der Einlage getroffen werden. Die Verbindung der Einlage des Kettengliedes erfolgt über Verknüpfungselemente nach dem Mehr-Komponenten-Spritzverfahren, insbesondere nach dem Zwei-Komponenten-Spritzverfahren. Hierdurch wird eine zuverlässige Verbindung zwischen der Einlage und dem Kettenglied erreicht. Das Mehr-Komponenten-Spritzverfahren ist ein an für sich bekanntes Verfahren zur Herstellung von Kunststoffteilen. Der Einsatz eines Zwei-Komponenten-Spritzverfahrens ist auf dem Gebiet der Energieführungsketten zur Herstellung von biegsamen Querstegen, die eine Verriegelung für in eine Energieführungskette geführten Leitungen durch die DE 195 12 088 bekannt.

Diese Druckschrift beschreibt ein Verfahren zum Herstellen einer Kettenlasche oder eines Kettengliedes aus Kunststoff für eine Energieführungskette mit einem Bolzen und einer Bolzenaufnahme sowie mit wenigstens einem Anschlag, bei dem ein erster Kunststoff in eine Form eingebracht und nach Erreichen einer vorgegebenen Festigkeit des ersten Kunststoffs ein zweiter Kunststoff angespritzt wird.

Zur Ausgestaltung der Verknüpfungselemente wird vorgeschlagen, daß diese im wesentlichen stegförmig ausgebildet sind. Vorzugsweise verlaufen die Verknüpfungselemente im wesentlichen quer zu der in die Einlage eingeleiteten Kraft. Diese Ausgestaltung der Verknüpfungselemente hat den Vorteil, daß ein Abscheren der Einlage auch bei hohen Scherkräften, die auf die Einlage einwirken, zuverlässig verhindert wird.

Nach einem weiteren vorteilhaften Gedanken wird vorgeschlagen, daß die Verknüpfungselemente einen im wesentlichen trapezförmigen Querschnitt aufweisen. Alternativ zu einem trapezförmigen Querschnitt können diese auch einen im wesentlichen pilzförmigen Querschnitt aufweisen. Hierdurch wird die Verbindungsfläche zwischen der Einlage und dem Kettenglied vergrößert. Es ist auch möglich, daß die Einlage um das Kettenglied so ausgestaltet sind, daß die Verbindungslinie zwischen dem Kettenglied und der Einlage, im Querschnitt betrachtet, wellenförmig verläuft.

Nach einem weiteren vorteilhaften Gedanken wird vorgeschlagen, daß die Einlage wenigstens teilweise den Bolzen bildet. Der Bolzen kann hierbei aus einem verschleißannen Kunststoff bestehen, wobei darauf geachtet werden sollte, daß der Kunststoff auch gleitfähig ist, wodurch die Reibungskräfte zwischen dem Bolzen und einer Bolzenaufnahme verringert werden.

Neben der Ausgestaltung des Bolzens aus einem zweiten Kunststoff in Form einer Einlage des Kettengliedes kann auch die Bolzenaufnahme durch eine Einlage gebildet werden. Durch geeignete Werkstoffpaarungen zwischen Bolzen und Bolzenaufnahme wird der Verschleiß zwischen diesen verringert. Gleichzeitig können hohe Kräfte in den Bolzen und die Bolzenaufnahme eingeleitet werden, so daß eine Energieführungskette, die aus solchen Kettengliedern aufgebaut ist, größere Leitungsgewichte aufnehmen und/oder eine größere freitragende Länge überbrücken kann.

Nach einem weiteren vorteilhaften Gedanken wird vorgeschlagen, daß das Kettenglied eine Einlage aufweist, die wenigstens teilweise die Oberfläche eines sich in Längsrichtung wenigstens einer Kettenlasche erstreckenden Randes bildet. Hierdurch wird ein einstückiges Kettenglied mit einer Gleitkufe ausgebildet, welches leicht herstellbar ist.

Während des Betriebes einer Energieführungskette werden die Kettenlaschen benachbarter Kettenglieder relativ zueinander um den bzw. die Bolzen verschwenkt. Zur Begrenzung des Verschwenkwinkels weist jede Kettenlasche wenigstens einen Anschlag auf. Beim Aufeinandertreffen der Anschläge benachbarter Kettenglieder kommt es zu einer nicht unerheblichen Schallemission. Die Anschläge werden auch auf Druck belastet. Um sicherzustellen, daß während des Betriebes einer Energieführungskette die Anschläge stets einen definierten Verschwenkwinkel zulassen wird vorgeschlagen, daß die Einlage wenigstens teilweise die Oberfläche eines Anschlags bildet. Die Einlage kann hierbei aus einem Kunststoff bestehen, der eine höhere Verschleißfestigkeit aufweist, als der Kunststoff der Kettenlasche. Es ist auch möglich die Einlage aus einem dämpfenden Kunststoff auszubilden, so daß die Schallemission verringert wird.

Eine Einlage in ein Kettenglied bildet einen funktionalen Bereich des Kettengliedes. Die Einlage kann auch aus mehreren Kunststoffen bestehen. Der Aufbau der Einlage ist hierbei an die Anforderungen des funktionalen Bereichs anzupasssen. So ist es beispielsweise auch möglich die Einlage aus zwei Kunststoffen unterschiedlicher Färbung herzustellen, so daß nach einem Abtrag einer Kunststoffschicht eine Schicht eines anderesfarbiger Kunststoff sichtbar wird, wodurch ein maximal zulässiger Verschleiß eines Kettengliedes signalisiert werden kann.

Zur Herstellung einer Kettenlasche eines Kettengliedes aus Kunststoff für eine Energieführungskette wird ein Verfahren vorgeschlagen, bei dem zunächst ein erster Kunststoff in eine Form eingebracht wird. Nach einem Entfernen eines Formeinsatzes, wenn der erste Kunststoff eine vorgegebene Festigkeit erreicht hat, wird wenigstens ein zweiter Kunststoff in einen durch den Formeinsatz freigegebenen Raum eingebracht. Der zweite Kunststoff weist hierbei vorzugsweise eine höhere Verschleißfestigkeit als der erste Kunststoff auf.

Weitere Vorteile und Einzelheiten eines Kettengliedes werden anhand eines in der Zeichnung dargestellten Ausführungsbeispiels erläutert. Es zeigen:
- Fig. 1: eine Vorderansicht eines Kettengliedes,
- Fig. 2: eine Schnittansicht entlang der Schnittlinie A-A nach Fig. 1, und
- Fig. 3: eine Draufsicht im Schnitt entlang der Linie B-B nach Fig. 1.

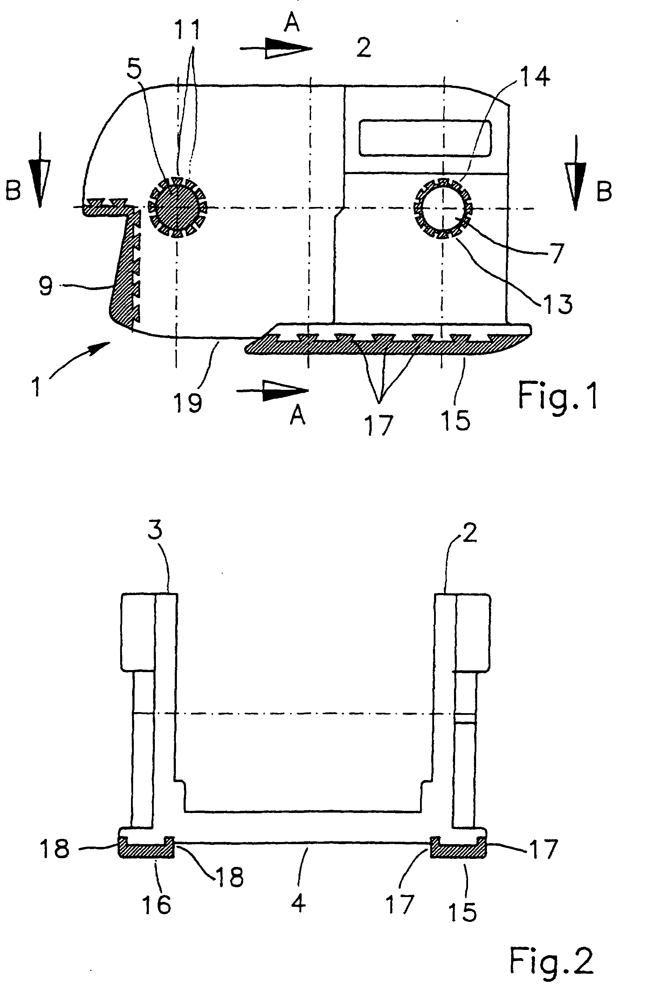

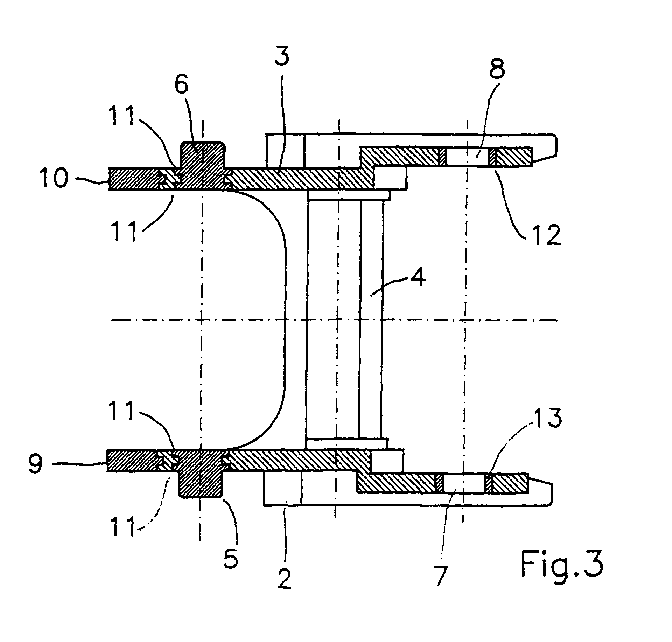

In der Fig. 1 ist ein Kettenglied 1 aus Kunststoff dargestellt. Das Kettenglied 1 ist zur Ausbildung einer Energieführungskette vorgesehen. Das Kettenglied weist zwei Kettenlaschen 2, 3 auf, die über eine Traverse 4 miteinander verbunden sind. Wie aus der Fig. 2 ersichtlich ist bilden die Kettenlaschen 2, 3 und die Traverse 4 ein U-förmiges Kettenglied. Die Kettenlaschen 2, 3 und die Traverse 4 sind einstückig ausgebildet. Dies ist nicht zwingend notwendig. Die Traverse 4 kann auch mit den Kettenlaschen 2, 3 lösbar verbunden sein. Jede Kettenlasche 2, 3 weist einen Bolzen 5 bzw. 6 sowie eine Bolzenaufnahme 7 bzw. 8 auf. In der Schnittdarstellung nach Fig. 3 sind die Bolzen 5, 6 und die Bolzenaufnahmen 7, 8 der Kettenlaschen 2, 3 ersichtlich. Die Bolzen 5, 6 und die Bolzenaufnahmen 7, 8 sind so ausgestaltet, daß diese eine gelenkige Verbindung zwischen benachbarten Kettengliedern einer Energieführungskette ermöglichen. Zur Begrenzung eines Verschwenkwinkels zwischen benachbarten Kettengliedern weist das Kettenglied Anschläge auf. Jede Lasche 2, 3 weist einen Anschlag 9 bzw. 10 auf. Die Form des Anschlages 9 bzw. 10 stellt ein mögliches Ausführungsbeispiel eines Anschlags dar.

Das erfindungsgemäße Kettenglied 1 weist Bereiche mit Einlagen auf, die einen Teil einer Oberfläche des Kettengliedes 1 bilden. Die Einlagen sind aus einem Kunststoff, der verschieden von dem Kunststoff der Kettenlasche 2, 3 ist. Die Einlagen sind mit dem Kettenglied 1 nach dem Zwei-Komponten-Spritzverfahren verbunden.

Die Einlage bildet die Bolzen 5, 6. Die Einlage ist über Verknüpfungselemente 11 mit der Kettenlasche 2 bzw. 3 verbunden. Die Verknüpfungselemente 11 sind stegförmig ausgebildet. Sie weisen einen im wesentlichen trapezförmigen Querschnitt auf. Wie aus der Fig. 1 ersichtlich ist, sind die Verknüpfungselemente 11 auf dem Kreisumfang des Bolzens 5 äquidistant zueinander ausgebildet.

In dem dargestellten Ausführungsbeispiel zeigt Fig. 3, daß die Verbindungselemente 11 sich lediglich über einen Teil der Dicke der Kettenlaschen 2 bzw. 3 in der Nähe der Bolzen 5, 6 erstrecken. Es ist auch möglich die Verknüpfungselemente 11 über die gesamte Dicke der Kettenlasche 2 bzw. 3 auszubilden.

Eine Einlage 12 bildet die Oberfläche der Bolzenaufnahme 8. Eine Einlage 13 bildet die Oberfläche der Bolzenaufnahme 7. Die Einlage 12 bzw. 13 besteht aus einem Kunststoff, der verschieden vom Kunststoff der Kettenlasche 2, 3 ist. Die Einlage 12 bzw. 13 ist über Verknüpfungselemente 14 mit der Kettenlasche 2 bzw. 3 verbunden. Wie aus der Fig. 1 in Verbindung mit Fig. 3 ersichtlich ist, erstrecken sich die Verknüpfungselemente 14 über die gesamte Dicke der Kettenlasche 2 bzw. 3 im Umgebungsbereich der Bolzenaufnahme 7 bzw. 8. Die Verknüpfungselemente 14 sind stegförmig ausgebildet. Sie weisen einen im wesentlichen trapezförmigen Querschnitt auf.

Das Kettenglied 1 weist zwei Einlagen 15, 16 auf, die einen Teil der Oberfläche eines sich in Längsrichtung der Kettenlasche 2 bzw. 3 erstrekkenden Randes 19 bilden. Die Einlage 15 bzw. 16 ist über Verknüpfungselemente 17 bzw. 18 mit der Kettenlasche 2 bzw. 3 verbunden. Die Einlage 15 und 16 bildet jeweils eine Gleitkufe. Wie aus der Fig. 2 ersichtlich ist, erstrecken sich die Verknüpfungselemente, die einen trapezförmigen Querschnitt aufweisen, nur über einen Teil der Breite der Einlage 15 bzw. 16.

Die Einlagen können auch aus unterschiedlichen Kunststoffen bestehen.

### BEZUGSZEICHENLISTE

- 1: Kettenglied
- 2, 3: Kettenlasche
- 4: Traverse
- 5, 6: Bolzen
- 7, 8: Aufnahme
- 9, 20: Anschlag
- 11: Verknüpfungselement
- 12, 13: Einlage
- 14: Verknüpfungselement
- 15, 16: Einlage
- 17, 18: Verknüpfungselement
- 19: Rand

## Patentansprüche

1. Kettenglied (1) aus einem ersten Kunststoff für eine Energieführungskette mit zwei Kettenlaschen (2, 3), die durch wenigstens eine Traverse (4) miteinander verbunden sind, wobei jede Kettenlasche (2; 3) einen Bolzen (5; 6) und eine Bolzenaufnahme (7; 8), wenigstens einen Anschlag (9; 10) sowie jeweils wenigstens einen Bereich mit einer Einlage (5; 6; 12; 13; 15; 16) aufweist, die wenigstens einen Teil einer Oberfläche der Kettenlasche (2; 3) bildet, wobei die Einlage (5; 6; 12; 13; 15; 16) aus einem zweiten Kunststoff besteht, der verschieden von dem ersten Kunststoff ist, **dadurch gekennzeichnet, daß** die Einlage (5; 6; 12; 13; 15; 16) über wenigstens ein Verknüpfungselement (11; 14; 17; 18) mit dem Kettenglied (1) nach dem Mehr-Komponenten-Spritzverfahren verbunden ist.

2. Kettenglied nach Anspruch 1, **dadurch gekennzeichnet, daß** das Verknüpfungselement (11, 14, 17, 18) im wesentlichen stegförmig ausgebildet ist.

3. Kettenglied nach Anspruch 1 oder 2, **dadurch gekennzeichnet, daß** das das Verknüpfungselement (11, 14, 17, 18) einen im wesentlichen trapezförmigen Querschnitt aufweist.

4. Kettenglied nach Anspruch 1 oder 2, **dadurch gekennzeichnet, daß** das das Verknüpfungselement (11, 14, 17, 18) einen im wesentlichen pilzförmigen Querschnitt aufweist.

5. Kettenglied nach einem der Ansprüche 1 bis 4, **dadurch gekennzeichnet, daß** die Einlage (5, 6) wenigstens teilweise den Bolzen bildet.

6. Kettenglied nach einem der Ansprüche 1 bis 5, **dadurch gekennzeichnet, daß** die Einlage (12, 13) wenigstens teilweise die Oberfläche der Bolzenaufnahme (7, 8) bildet.

7. Kettenglied nach einem der Ansprüche 1 bis 6, **dadurch gekennzeichnet, daß** die Einlage (15, 16) wenigstens teilweise die Oberfläche eines sich in Längsrichtung wenigstens einer Kettenlasche (2, 3) erstreckenden Randes (19) bildet.

8. Kettenglied nach einem der Ansprüche 1 bis 7, **dadurch gekennzeichnet, daß** die Einlage wenigstens teilweise die Oberfläche eines Anschlags (9, 10) bildet.

9. Kettenglied nach einem der Ansprüche 1 bis 8, **dadurch gekennzeichnet, daß** die Einlage (5, 6, 9, 10, 12, 13, 15, 16) aus wenigstens einem zweiten Kunststoff besteht, der eine höhere Verschleißfestigkeit aufweist als der erste Kunststoff.

10. Kettenglied nach Anspruch 8, **dadurch gekennzeichnet, daß** die Einlage (9, 10) aus einem dämpfenden Kunststoff besteht.

11. Verfahren zum Herstellen einer Kettenlasche (1, 2) oder eines Kettengliedes aus Kunststoff für eine Energieführungskette mit einen Bolzen (5, 6) und einer Bolzenaufnahme (7, 8) sowie mit wenigstens einem Anschlag (9, 10), mit folgenden schritten:
Einbringen eines ersten Kunststoffes in eine Form,
Entfernen eines Formeneinsatzes nachdem der erste Kunststoff eine vorgegebene Festigkeit erreicht hat,
Einbringen wenigstens eines zweiten Kunststoffes in einen durch den Formeneinsatz freigegebenen Raum.

## Claims

1. A chain link (1) of a first plastics material for an energy guide chain having two chain plates (2, 3), which are connected together by at least one transverse portion (4), each chain plate (2; 3) having a bolt (5; 6) and a bolt receiving means (7; 8), at least one abutment (9; 10) and at least one region with one insert (5; 6; 12; 13; 15; 16) respectively, which forms at least a part of a surface of the chain plate (2; 3), wherein the insert (5; 6; 12; 13; 15; 16) is consisting of a second plastics material, which is different from the first plastics material, **characterized in that** the insert (5; 6; 12; 13; 15; 16) is connected to the chain link (1) by way of at least one connecting element (11; 14; 17; 18) in accordance with the multicomponent injection procedure.

2. Chain link according to claim 1, **characterized in that** the connecting element (11, 14, 17, 18) is of a substantially bar-like configuration.

3. Chain link according to claim 1 or 2, **characterized in that** the connecting element (11, 14, 17, 18) has a substantially trapezoidal cross-section.

4. Chain link according to claim 1 or 2, **characterized in that** the connecting element (11, 14, 17, 18) has a substantially mushroom shaped cross-section.

5. Chain link according to one of claims 1 to 4, **characterized in that** the insert (5, 6) forms at least partially the bolt.

6. Chain link according to one of claims 1 to 5, **characterized in that** the insert (12, 13) at least partially forms the surface of the bolt receiving means (7, 8).

7. Chain link according to one of claims 1 to 6, **characterized in that** the insert (15, 16) at least partially forms the surface of an edge (19) extending in the longitudinal direction of at least one chain plate (2, 3).

8. Chain link according to one of claims 1 to 7, **characterized in that** the insert at least partially forms the surface of an abutment (9, 10).

9. Chain link according to one of claims 1 to 8, **characterized in that** the insert (5, 6, 9, 10, 12, 13, 15, 16) is consisting of at least one second plastics material, which has a higher level of resistance to wear than the first plastics material.

10. Chain link according to claim 8, **characterized in that** the insert (9, 10) is consisting of a damping plastics material.

11. A process for the production of a chain plate (1, 2) or a chain link of plastics material for an energy guide chain having a bolt (5, 6) and a bolt receiving means (7, 8) and at least one abutment (9, 10), with the following steps:
introducing a first plastics material into a mould,
removing a mould insert after the first plastics material has reached a predetermined strength,
introducing at least one second plastics material into a space left by the mould insert.

## Revendications

1. Maillon de chaîne (1) d'au moins une première matière plastique pour une chaîne de transport d'énergie avec deux éclisses de chaîne (2, 3) qui sont reliées entre-elles par au moins une traverse (4), dans quel cas chaque éclisse de chaîne (2 ; 3) présente un axe (5 ; 6) et un logement d'axe (7 ; 8), au moins une butée (9 ; 10) ainsi qu'au moins respectivement une zone avec un insert (5; 6; 12; 13; 15; 16) qui forme au moins une partie d'une surface de l'éclisse de chaîne (2; 3), dans quel cas l'insert (5; 6; 12; 13; 15; 16) est constitué d'une deuxième matière plastique qui est différente de la première matière plastique, **caractérisé en ce que** l'insert (5; 6; 12; 13; 15; 16) est relié au maillon de chaîne (1) à l'intermédiaire d'au moins un élément de liaison (11; 14; 17; 18) selon le procédé d'injection de composants multiples.

2. Maillon de chaîne selon la revendication 1, **caractérisé en ce que** l'élément de liaison (11, 14, 17, 18) est réalisé sensiblement en forme d'entretoise.

3. Maillon de chaîne selon la revendication 1 ou 2, **caractérisé en ce que** l'élément de liaison (11, 14, 17, 18) a une section sensiblement de forme trapézoïdale.

4. Maillon de chaîne selon la revendication 1 ou 2, **caractérisé en ce que** l'élément de liaison (11, 14, 17, 18) a une section sensiblement en forme de champignon.

5. Maillon de chaîne selon l'une des revendications 1 à 4, **caractérisé en ce que** l'insert (5, 6) forme au moins partiellement l'axe.

6. Maillon de chaîne selon l'une des revendications 1 à 5, **caractérisé en ce que** l'insert (12, 13) forme au moins partiellement la surface du logement d'axe (7, 8).

7. Maillon de chaîne selon l'une des revendications 1 à 6, **caractérisé en ce que** l'insert (15, 16) forme au moins partiellement la surface d'un bord (19) s'étendant en direction longitudinale d'au moins une éclisse de chaîne (2, 3).

8. Maillon de chaîne selon l'une des revendications 1 à 7, **caractérisé en ce que** l'insert forme au moins partiellement la surface d'une butée (9, 10).

9. Maillon de chaîne selon l'une des revendications 1 à 8, **caractérisé en ce que** l'insert(5; 6; 9, 10, 12; 13; 15; 16) est constitué d'au moins une deuxième matière plastique qui a une résistance à l'usure plus élevée que la première matière plastique.

10. Maillon de chaîne selon la revendication 8, **caractérisé en ce que** l'insert (9, 10) est constitué d'une matière plastique à amortissement.

11. Procédé de fabrication d'une éclisse de chaîne (1, 2) ou d'un maillon de chaîne en matière plastique pour une chaîne de transport d'énergie comportant un axe (5, 6) et un logement d'axe (7, 8) ainsi qu'au moins une butée (9, 10), avec les étapes suivantes:
Introduction d'une première matière plastique dans un moule,
enlèvement d'un insert de moule, après que la première matière plastique a atteint une dureté prédéterminée,
introduction d'au moins une deuxième matière plastique dans un espace libéré par l'insert de moule.
